# EUROPÄISCHE PATENTANMELDUNG

(11) **EP 0 743 539 A2**
(43) Veröffentlichungstag der Anmeldung: **20.11.1996**
(21) Anmeldenummer: 96107936.5
(22) Anmeldetag: 17.05.1996
(51) Int. Cl.: G01V 3/12

(54) **Verfahren und Sondenanordnung zur elektromagnetischen Detektion von metallischen Objekten**

(30) Priorität: 18.05.1995 DE 19518342
(71) Anmelder: FIRMA ING. KLAUS EBINGER, D-51149 Köln (DE)
(72) Erfinder: Ebinger, Klaus, 51143 Köln (DE); Günnewig, Augustinus, 50733 Köln (DE)
(74) Vertreter: Heim, Hans-Karl, Dipl.-Ing.

(57) **Zusammenfassung**

Die Erfindung betrifft ein Verfahren und eine Sondenanordnung zur elektromagnetischen Detektion von metallischen Objekten. Dazu sind mehrere Empfangsschleifen vorgesehen, die ein vom gesuchten Objekt abgestrahltes Sekundärsignal detektieren. Die mit den verschiedenen Schleifen empfangenen Sekundärsignale werden miteinander verknüpft und objektspezifisch ausgewertet. Dadurch wird eine exakte Information über den Ort und die Lage des zu detektierenden Objekts erreicht.

## Beschreibung

Die Erfindung betrifft ein Verfahren und eine Sondenanordnung zur elektromagnetischen Detektion von metallischen Objekten, bei dem ein elektromagnetisches Signal ausgestrahlt wird, welches das zu detektierende Objekt zur Abstrahlung eines Sekundärsignales anregt, wobei das Sekundärsignal mit mehreren Schleifen in Form mehrerer schleifenspezifischer Sekundärsignale empfangen, objektspezifisch ausgewertet und dargestellt wird.

Aus der DE 42 42 541 A1 ist ein Verfahren und eine Sondenanordnung der eingangs genannten Art bekannt. Dabei werden innerhalb einer Trägervorrichtung vier nebeneinanderliegende Sende- und Empfangsspulen über ein zu untersuchendes Gebiet bewegt, wodurch eine größere Fläche abgescannt werden kann. Die Information jeder einzelnen Spule wird abgefragt und einer Weiterverarbeitung zugeführt.

Mit diesem bekannten Verfahren und der entsprechenden Sondenanordnung erfolgt eine parallele Abtastung mit vier voneinander unabhängigen Sende- und Empfangsspulen. Dabei ist die Signalauswertung noch nicht optimal und die Ortsinformation des zu detektierenden Objekts könnte mit höherer Genauigkeit und in einem größeren Bereich ermöglicht werden.

Der Erfindung liegt die **Aufgabe** zugrunde, ein Verfahren und eine Sondenanordnung der eingangs genannten Art zu schaffen, welches bzw. welche eine besonders gute Auswertung der Signalinformation gewährleistet und zu einer möglichst genauen örtlichen Detektion des gesuchten Objekts führt. Die Lösung dieser Aufgabe erfolgt verfahrensmäßig gemäß den kennzeichnenden Merkmalen des Anspruchs 1 und anordnungsmäßig entsprechend den kennzeichnenden Merkmalen des Anspruchs 10.
Vorteilhafte Weiterbildungen sind in den Unteransprüchen beschrieben.

Entsprechend einem wesentlichen Grundgedanken der Erfindung wird ein elektromagnetisches Signal ausgestrahlt, welches das zu detektierende Objekt zur Abstrahlung eines Sekundärsignales anregt, das durch den Empfang in einer Vielzahl von Empfangsschleifen gezielt verknüpft und ausgewertet werden kann. In der Sondenanordnung sind mehrere Empfangsschleifen matrixförmig angeordnet und diese sind in der Lage, jeweils das vom zu detektierenden Objekt abgestrahlte Sekundärsignal zu empfangen. Aufgrund der unterschiedlichen Entfernungen und räumlichen Anordnung der verschiedenen Empfangsschleifen zu dem Objekt mißt man schleifenspezifische Sekundärsignale, die sich voneinander unterscheiden. Diese unterschiedlichen Meßwerte werden dann miteinander verknüpft oder verglichen, um auf diese Weise eine exakte Information über den Ort und die Lage des zu detektierenden Objekts zu erhalten.

Vorteilhaft ist es, die empfangenen Sekundärsignale zunächst abzuspeichern und dann gemeinsam auszuwerten. Genausogut ist es auch möglich, jedes einzelne Sekundärsignal der Verknüpfung zuzuführen und dort zwischenzuspeichern und das jeweils zwischengespeicherte Ergebnis dann mit dem nächsten empfangenen Sekundärsignal weiterzuverarbeiten. Bei der Auswertung der Sekundärsignale werden bevorzugt Addition und Subtraktion durchgeführt. So können sämtliche empfangenen Sekundärsignale aufaddiert werden, um auf diese Weise ein stärkeres Ortungssignal zu erhalten, als es bei Verarbeitung nur eines Signals möglich wäre.

Bevorzugt ist es jedoch, einen Teil der empfangenen Sekundärsignale zu einer ersten Summe auszuaddieren und einen weiteren Teil der empfangenen Sekundärsignale zu einer zweiten Summe aufzuaddieren und aus diesen beiden Summen ein Differenzsignal zu bilden. Dadurch können Informationen über den genauen Ort und die Lage des zu detektierenden Objekts erhalten werden. Mit diesem Verfahren können also nicht nur relative Leitfähigkeitsänderungen im Boden nachgewiesen werden, sondern auch räumlich verteilte elektrische Differenzen.

Durch eine Differenzbildung aus einigen Sekundärsignalen erhält man eine Richtungsinformation, mit deren Hilfe es dann auch möglich ist, die gesamte Sondenanordnung automatisch in diese Richtung nachzuführen.

Durch die Räumlichkeit und Messung und Weiterverarbeitung der einzelnen empfangenen Sekundärsignale ist es möglich von den Suchobjekten computergestützte Schattenbilder zu erzeugen. Besonders bevorzugt ist es dabei, die aufzusummierenden, empfangenen Sekundärsignale so auszuwählen, daß automatisch eine Bodenkompensation durchgeführt wird. Dazu müssen zwei Gruppen von Sekundärsignalen ausgewählt werden, die in Abwesenheit eines zu suchenden Objekts bodenspezifisch die gleiche Summe ergeben. Die Differenz der beiden Gruppen ergibt also "Null", solange kein Objekt das empfangene Sekundärsignal verändert und dadurch ein von "Null" abweichendes Ergebnis hervorruft. Dies kann beispielsweise durch Differenzbildung von jeweils zwei direkt nebeneinander angeordneten Empfangsschleifen geschehen.

Das Verfahren wird vorzugsweise in Puls-Induktionstechnik (PI-Technik) durchgeführt. Dabei können Frequenzen zwischen 10 Hz und 10 kHz benutzt werden. Besonders bevorzugt ist dabei die Verwendung bipolarer Impulse. Möglich ist jedoch auch ein kontinuierlicher Betrieb.

Bei Verwendung von Einzelimpulsen ist es besonders bevorzugt, zunächst jedes einzelne empfangene Signal mit einem Sampling- oder Multiplexverfahren abzutasten und die Abtastwerte für sich weiterzuverarbeiten. Dies kann für die Abtastwerte jedes einzelnen empfangenen Sekundärsignals in gleicher Weise geschehen, wie dies oben für die Gesamtheit der Sekundärsignale beschrieben worden ist. Im Ergebnis erhält man dadurch in jedem Empfangskanal ein Sekundärsignal, welches bereits aufbereitet und weiterverarbeitet wurde. Beispielsweise erhält man bei Summierung der einzelnen Abtastwerte Sekundärsignale, die jedes für sich eine gegenüber dem üblichen empfangenen Sekundärsignal eine um bis zu 30% gesteigerte Empfindlichkeit aufweisen. Mit den so aufbereiteten Einzelwerten wird dann das weitere Verfahren und die Verknüpfung der empfangenen und aufbereiteten Sekundärsignale weitergeführt. Diese Weiterbildung kann sowohl mit Mono-Einzelimpulsen als auch bevorzugt mit bipolaren Einzelimpulsen durchgeführt werden.

Bevorzugt ist weiterhin die Auswertung mit digitalen Techniken und Mikroprozessoren, um die Vielfalt der gegebenen Meß- und Verknüpfungsmöglichkeiten nutzen zu können.

Zur Durchführung des Verfahrens ist erfindungsgemäß eine Sondenanordnung mit mehreren matrixförmig angeordneten Empfangsschleifen vorgesehen. Um die matrixförmig angeordneten Empfangsschleifen herum ist eine Sendeschleife ausgebildet.

Bei dieser Anordnung ist es von Vorteil, daß eine große, um die Empfangsschleifen umlaufende Sendeschleife verwendet wird, die ein weitläufiges Magnetfeld in den Boden senden kann. Dadurch wird die Eindringtiefe des Magnetfeldes in den Boden größer. Auch ist es technisch von Vorteil, mit getrennten Sende- und Empfangsschleifen zu arbeiten.

Bevorzugt sind dabei die Empfangsschleifen in Form einer zweidimensionalen Matrix angeordnet. Dies ist also im kleinsten Fall eine 2 x 2 Matrix. Durch die Auswertung von derartig angeordneten Empfangsschleifen ist eine exaktere und genauere Orts- und Tiefenbestimmung des Objekts möglich. Dazu erfolgt vorzugsweise eine getrennte Abfrage der Empfangsspulen in x und y-Richtung. Zumindest sind an bestimmten Orten der Schleife Objektkonzentrationen erkennbar. Dadurch kann die Lage der Objekte der Suchtrasse zugeordnet werden.

Dabei können die Empfangsschleifen auch noch weiter unterteilt werden. Einzelne Empfangsschleifen können zu einer sogenannten Hauptschleife zusammengeschlossen werden, wobei jeweils die einzelnen Empfangsschleifen als auch die Hauptschleifen als Ganzes abgefragt und ihre Werte untereinander verglichen und verknüpft werden können. In einer bevorzugten Ausführungsform sind vier Hauptschleifen vorgesehen, von denen jede aus vier oder acht Empfangsschleifen besteht. Der Vorteil dieser Anordnung besteht darin, daß durch die jeweilige Größe der Empfangsschleifen eine Anpassung an die Suchaufgabe möglich ist. Werden nur große Objekte gesucht, so ist es ausreichend, wenn nur die Werte der Hauptschleifen abgefragt werden. Mit kleiner werdenden Suchobjekten wird die Abfragung kleinerer Suchschleifen notwendig. Auch die Tiefenreichweite kann durch Auswahl und Einsatz der jeweiligen Empfangsschleifen gesteuert werden.

In einer anderen Weiterbildung der Erfindung ist die große umlaufende Sendeschleife so ausgebildet, daß sie sowohl senden als auch empfangen kann. Dieser empfangene Wert kann wiederum mit den einzelnen empfangenen Sekundärsignalen in Relation gebracht werden und dadurch eine zusätzliche Verknüpfung mit der Folge einer erhöhten Genauigkeit der Messung erreicht werden. Der Durchmesser der großen Sendeschleife kann z.B. zwischen 1/2 und 5 m betragen. Umgekehrt gibt es auch Einsatzfälle, in denen es bevorzugt ist, die kleinen Empfangsschleifen und/oder die Hauptschleifen auch als Sendeschleifen auszubilden.

In einer bevorzugten Ausführungsform der Sondenanordnung ist jede der Empfangsschleifen, jede der Hauptschleifen und die auch als Empfangsschleife verwendete Sendeschleife an eine Sample- und Holdeinrichtung zur Abtastung und Speicherung der empfangenen Sekundärsignale angeschlossen. Die Sample- und Holdeinrichtungen weisen Analogschalter und Kondensatoren auf.

Darüber hinaus können in einer Weiterentwicklung der Erfindung auch unterschiedlich große Empfangsschleifen verwendet werden. Dabei werden z.B. innerhalb einer Hauptschleife eine sehr große Empfangsschleife und einige kleinere, um diese herum angeordnete Empfangsschleifen verwendet. Auf diese Weise kann mit der größeren Empfangsschleife eine höhere Empfindlichkeit erzielt werden, wobei die kleineren Empfangsschleifen dann zur genaueren Ortslokalisation dienen.

Die gesamte Sondenanordnung wird günstigerweise in einer fahrbaren, metallfreien Vorrichtungen untergebracht, in der die Schleifenhöhe zum Boden verstellbar ist. Die Verstellbarkeit hat den Vorteil, daß der Einfluß stark störender Böden durch höheren Meßabstand reduziert werden kann. Auch kleine metallische Teile können dadurch in gewissen Grenzen ausgeblendet werden. Eine solche Ausblendung von unerwünschten Kleinteilen kann jedoch auch durch eine computergesteuerte Signalauswahl erfolgen. In manchen Anwendungsfällen kann auch eine schwimmbare und/oder tauchbare Ausbildung der Sondenanordnung zum Einsatz bei einer Objektsuche unter Wasser von Vorteil sein. Dazu wird die Sondenanordnung mit der zugehörigen Elektronik in einem wasserdicht gekapselten Gehäuse angeordnet. Die Anzeige der Ergebnisse erfolgt in einem Display, das für den Benutzer einsehbar ist und von der Sondenanordnung per Funk oder Kabelverbindung gesteuert wird. Die schwimm- und tauchfähige Sondenanordnung ist mit flutbaren Tanks ausgestattet, mit denen der Auftrieb oder die Tauchtiefe gesteuert werden kann.

Nachfolgend wird die Erfindung anhand einer Zeichnung weiter erläutert. Die schematische Darstellung zeigt:

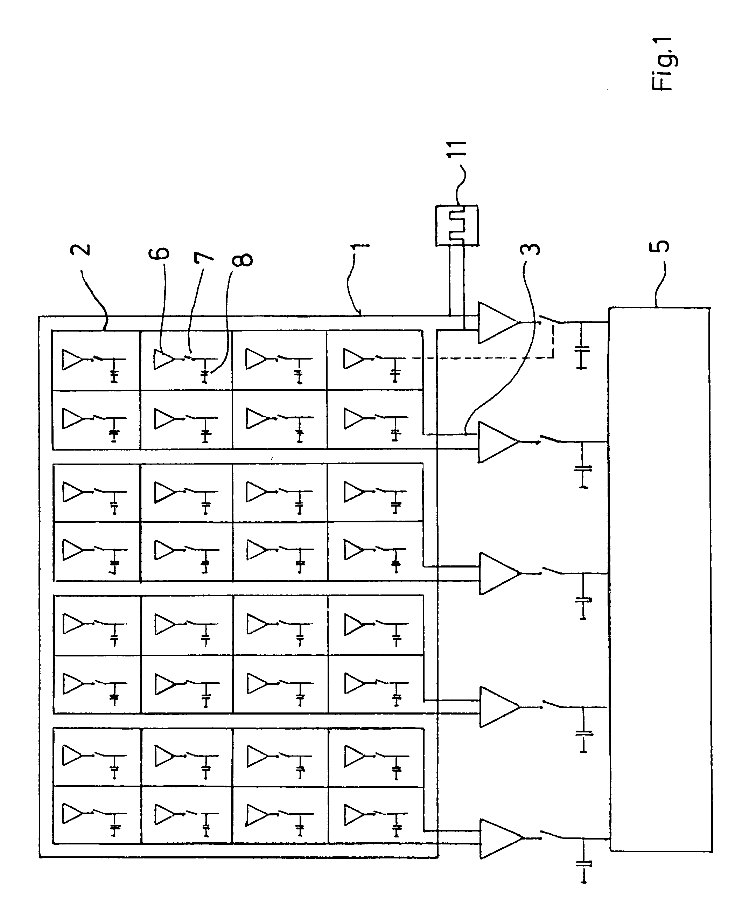

- Fig. 1: ein Blockschaltbild zur Verdeutlichung der prinzipiellen Arbeitsweise der Sondenanordnung.

In Figur 1 ist ein Blockschaltbild einer Sondenanordnung dargestellt. Dabei ist eine Sendeschleife 1 dargestellt, die an einen Sender 11 angeschlossen ist. Der Sender erzeugt Einzelimpulse, die über die große umlaufende Sendeschleife 1 weitläufig in den Boden abgestrahlt werden können. Innerhalb der Sendeschleife 1 sind die matrixförmig angeordneten Empfangsschleifen 2 dargestellt. Jede der Empfangsschleifen bildet für sich einen Empfangskanal. Jeweils acht einzelne Empfangsschleifen 2 sind zu einer Hauptschleife 3 zusammengefaßt, die wiederum für sich einen Empfangskanal bilden. Da auch die Sendeschleife 1 als zusätzlicher Empfangskanal ausgebildet ist, ergeben sich insgesamt 37 Empfangskanäle, wovon 32 auf die einzelnen Empfangsschleifen 2, vier auf die Hauptschleifen 3 und ein Empfangskanal auf die Sendeschleife 1 entfällt. Die Hauptschleifen 3 sind mit dem Multiplexer 5 verbunden, über den die 37 Empfangskanäle, also die 37 empfangenen Sekundärsignale, abgefragt und einer Verknüpfung der Einzelwerte und einer Weiterverarbeitung zugeführt werden. Die Schleifen sind üblicherweise als Spulen ausgeführt.

Die Aufbereitung der einzelnen Meßwerte, die durch einen Datenlogger beim Suchen aufgenommen und zwischengespeichert werden, erfolgt später durch eine computergestützte Weiterverarbeitung. Dabei kann der dokumentierte Suchvorgang in beliebiger Form durch geeignete Software nachvollzogen werden. Eine direkte analoge Anzeige beim Suchen ist ebenfalls möglich. So auch die Angabe, in welchem Teil der Schleife sich Metallobjekte befinden.

Der Figur 1 ist weiterhin zu entnehmen, daß die einzelnen Empfangsschleifen 2 und auch die Hauptschleifen 3 jeweils einen Empfänger 6 und eine Sample- und Holdeinrichtung mit Analogschaltern 7 und Kondensatoren 8 zur zeit- und/oder amplitudenbezogenen Abtastung und Zwischenspeicherung von Sekundärsignalen aufweisen.

## Patentansprüche

1. Verfahren zur elektromagnetischen Detektion von, insbesondere metallischen, Objekten, bei dem ein elektromagnetisches Signal ausgestrahlt wird, welches das zu detektierende Objekt zur Abstrahlung eines Sekundärsignals anregt, wobei das Sekundärsignal mit mehreren Schleifen in Form mehrerer, schleifenspezifischer Sekundärsignale empfangen, objektspezifisch ausgewertet und dargestellt wird,
dadurch **gekennzeichnet,**
daß die schleifenspezifischen Sekundärsignale einer Verknüpfung unterzogen werden, wobei die Verknüpfung objektspezifisch durchgeführt wird, und daß die Verknüpfungssignale einer Auswertung und Anzeige zugeführt werden.

2. Verfahren nach Anspruch 1,
dadurch **gekennzeichnet,**
daß die Sekundärsignale gespeichert und anschließend gemeinsam ausgewertet werden.

3. Verfahren nach einem der Ansprüche 1 oder 2,
dadurch **gekennzeichnet,**
daß die Verknüpfung durch Addition oder Subtraktion der Sekundärsignale erfolgt.

4. Verfahren nach einem der vorhergehenden Ansprüche,
dadurch **gekennzeichnet,**
daß ein Teil der Sekundärsignale zu einer ersten Summe aufaddiert wird,
daß ein Teil der Sekundärsignale zu einer ersten Summe aufaddiert wird,

5. Verfahren nach Anspruch 4,
dadurch **gekennzeichnet,**
daß die Auswahl der aufzusummierenden Sekundärsignale in Abhängigkeit vom Untergrund erfolgt.

6. Verfahren nach einem der vorhergehenden Ansprüche,
dadurch **gekennzeichnet**,
daß Einzelimpulse mit einer Frequenz von 10 Hz bis 10 kHz ausgestrahlt werden.

7. Verfahren nach einem der vorhergehenden Ansprüche,
dadurch **gekennzeichnet,**
daß bipolare Impulse ausgestrahlt werden.

8. Verfahren nach einem der Ansprüche 6 oder 7,
dadurch **gekennzeichnet,**
daß aus den einzelnen Sekundärsignalen zu vorgebbaren Samplingzeiten Abtastsignale erzeugt werden, die durch Addition und/oder Subtraktion verknüpft werden und das Ergebnis als aufbereitetes Sekundärsignal einer Weiterverarbeitung zugeführt wird.

9. Verfahren nach einem der vorhergehenden Ansprüche,
dadurch **gekennzeichnet,**
daß die Verknüpfung und die Auswertung digital und mikroprozessorgesteuert durchgeführt wird.

10. Sondenanordnung zur elektromagnetischen Detektion von, insbesondere metallischen, Objekten, welche mehrere Schleifen aufweist, die zum Empfang von Magnetfeldsignalen ausgebildet sind, insbesondere zur Durchführung des Verfahrens nach einem der Ansprüche 1 bis 9,
dadurch **gekennzeichnet,**
daß die Schleifen matrixförmig angeordnet und insbesondere als Empfangsschleifen (2, 3) ausgebildet sind, daß eine Sendeschleife (1) vorgesehen ist, und daß die Sendeschleife (1) umlaufend um die matrixförmig angeordneten Empfangsschleifen (2) ausgebildet ist.

11. Sondenanordnung nach Anspruch 10,
dadurch **gekennzeichnet,**
daß die Empfangsschleifen (2) in Form einer zweidimensionalen Matrix angeordnet sind.

12. Sondenanordnung nach Anspruch 10 oder 11,
dadurch **gekennzeichnet,**
daß mehrere Empfangsschleifen (2) zu einer Hauptschleife (3) zusammengeschaltet sind.

13. Sondenanordnung nach einem der Ansprüche 10 bis 12,
dadurch **gekennzeichnet,**
daß vier Hauptschleifen (3) vorgesehen sind, von denen jede aus vier oder acht Empfangsschleifen (2) besteht.

14. Sondenanordnung nach einem der Ansprüche 10 bis 13,
dadurch **gekennzeichnet,**
daß die umlaufende Sendeschleife (1) als Sende- und Empfangsschleife ausgebildet ist.

15. Sondenanordnung nach einem der Ansprüche 10 oder 11,
dadurch **gekennzeichnet,**
daß jede der Empfangsschleifen (2) an eine Sample- und Holdeinrichtung zur Abtastung und Speicherung von Abtastsignalen des empfangenen Sekundärsignals ausgebildet ist.

16. Sondenanordnung nach Anspruch 12,
dadurch **gekennzeichnet,**
daß jede der Hauptschleifen (3) an eine Sample- und Holdeinrichtung zur Abtastung und Speicherung von Abtastsignalen des empfangenen Sekundärsignals angeschlossen ist.

17. Sondenanordnung nach Anspruch 14,
dadurch **gekennzeichnet,**
daß die umlaufende Sende- und Empfangsschleife an eine Sample- und Holdeinrichtung zur Abtastung und Speicherung von Abtastsignalen des empfangenen Sekundärsignales angeschlossen ist.

18. Sondenanordnung nach einem der Ansprüche 15 bis 17,
dadurch **gekennzeichnet,**
daß die Sample- und Holdeinrichtung Analogschalter 7 und Kondensatoren 8 aufweist.

19. Sondenanordnung nach einem der Ansprüche 10 bis 18,
dadurch **gekennzeichnet,**
daß ein Multiplexer (5) vorgesehen ist, der in Abhängigkeit von der Suchaufgabe nur ausgewählte Empfangsschleifen (2, 3) abfragt.

20. Sondenanordnung nach einem der vorhergehenden Ansprüche,
dadurch **gekennzeichnet,**
daß die Sondenanordnung in einer höhenverstellbaren, fahrbaren Vorrichtung angeordnet ist.

21. Sondenanordnung nach einem der vorhergehenden Ansprüche,
dadurch **gekennzeichnet,**
daß die Sondenanordnung in einer schwimmfähigen und/ oder tauchfähigen Vorrichtung angeordnet ist.

22. Sondenanordnung nach einem der vorhergehenden Ansprüche,
dadurch **gekennzeichnet,**
daß die Empfangsschleifen unterschiedlich groß ausgebildet sind.
